# FASCICULE DE BREVET EUROPEEN

(11) **EP 1 260 696 B1**
(45) Date de publication et mention de la délivrance du brevet: **18.01.2006**
(21) Numéro de dépôt: 02290829.7
(22) Date de dépôt: 04.04.2002
(51) Int. Cl.: F02K 1/76

(54) **Système de verrouillage synchronisé des portes d'un inverseur de poussée**
Synchronisierte Verriegelungsvorrichtung für die Klappen einer Schubumkehrvorrichtung
Synchronised latch system for thrust reverser blocker doors

(30) Priorité: 05.04.2001 FR 0104625
(43) Date de publication de la demande: 27.11.2002
(73) Titulaire: AIRCELLE, 76700 Gonfreville l'Orcher (FR)
(72) Inventeur: Gonidec, Patrick, 31200 Toulouse (FR); Rouyer, Pascal, 76430 Saint-Aubin Routot (FR)
(74) Mandataire: Chevalier, Renaud Philippe

(56) Documents cités:
- EP-A- 0 646 718
- FR-A- 2 711 187
- GB-A- 2 116 129
- US-A- 5 720 449
- US-A- 6 021 636
- US-A- 6 045 091

## Description

L'invention concerne un dispositif d'inversion de poussée pour turboréacteur à double flux.

Elle concerne plus précisément un inverseur de poussée de turboréacteur, comportant, dans une section annulaire d'un capotage extérieur entourant un canal d'éjection de gaz, une structure fixe comportant des poutres longitudinales délimitant entre elles des passages, et une pluralité de portes mobiles qui, en position inactive lors d'un fonctionnement en jet direct, obturent lesdits passages et constituent une partie du capotage extérieur et qui, en position d'inversion de poussée, obturent au moins partiellement le canal d'éjection et dévient le jet gazeux vers les passages.

Les portes sont déplacées par des moyens de commande constitués, par exemple, par des vérins supportés par un cadre avant rigide situé en amont des passages. Elles sont en général montées dans une zone intermédiaire de leurs parois latérales sur les poutres. En position active, les portes basculent de telle façon que la partie des portes située en aval des pivots vient obstruer plus ou moins totalement le canal du flux secondaire dit froid et de telle façon que la partie amont des portes vient dégager les passages dans le capotage extérieur de manière à permettre au flux secondaire d'être canalisé radialement par rapport à l'axe du turboréacteur.

La partie amont des portes fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à détruire la poussée de ce flux, voire à commencer à générer une contre-poussée en créant une composante du flux dévié vers l'amont.

Le rôle de l'inverseur de poussée en mode inversion est de créer une contre-poussée qui freine l'aéronef notamment lors du roulage sur la piste après l'atterrissage.

II est donc impératif que les portes soient maintenues dans la position inactive ou fermée durant les phases de vol. C'est pourquoi il est prévu des systèmes de verrouillage des portes en position fermée.

En cas d'éclatement de disque du moteur, l'inverseur peut subir des dommages importants. Dans l'éventualité, même improbable d'un tel événement, l'inverseur ne doit pas malgré tout se déployer. Pour atteindre cet objectif, on peut utiliser des verrous latéraux implantés le plus souvent dans la structure fixe de l'inverseur de poussée et situés à une position longitudinale différente d'un autre système de verrouillage de la porte de manière à ce que les débris d'un disque ne puissent pas atteindre simultanément tous les systèmes de verrouillage de la porte de l'inverseur. La philosophie améliorant la résistance à l'éclatement moteur consiste à rendre solidaire le plus possible de pièces mobiles de l'inverseur. Il est donc très intéressant d'assurer la synchronisation à l'ouverture de deux portes d'un inverseur à portes puisque la probabilité de détériorer les organes de rétention de deux portes lors d'un éclatement est beaucoup plus faible que celle de rupture du verrouillage d'une seule porte.

Indépendamment de l'éclatement de disque moteur, la sécurité de l'inverseur à l'égard du déploiement intempestif peut être renforcée par l'addition d'un troisième verrou qui pourra pallier les défaillances des autres systèmes de verrouillage si nécessaire. Cet ajout n'influe pas sur la fiabilité du système de commande mais renforce celle des verrous. Or, dans l'état de la technique actuelle, ce verrou est muni d'un système de commande plus ou moins indépendant de celui des autres verrous. Ce système engendre un accroissement de la masse et, dans une certaine mesure, une diminution de la fiabilité du système de commande.

Une des solutions possibles consiste également à synchroniser les parties mobiles de l'inverseur, pour assurer une ligne de défense mécanique Indépendante du système de commande de l'inverseur. Cependant, les dispositifs de synchronisation de portes sont en général lourds. Il s'agit souvent de vis de synchronisation de vérins dont la fiabilité en tant qu'organe de verrouillage est parfois discutable.

Enfin, il est extrêmement délicat de synchroniser les portes par leurs axes, compte tenu des couples importants des efforts de pression qu'elles subissent.

Le document EP 0 646 718 décrit un inverseur de poussée de turboréacteur conforme au préambule de la présente revendication 1.

Le but de l'invention est de proposer un inverseur de poussée tel que défini en introduction dans lequel les portes sont retenues en position fermée lors d'un éclatement du moteur ou en cas de défaillance complète du système de verrouillage d'une porte.

Un autre but de l'invention est de proposer un inverseur de poussée qui comporte un système de verrouillage passif dont le fonctionnement est basé sur la synchronisation du mouvement des portes à l'ouverture sans organe de commande extérieur.

L'invention atteint son but par le fait que chaque crochet de l'une des deux portes est lié en rotation à un crochet de l'autre porte par un organe de liaison mécanique de manière à empêcher le déverrouillage d'une porte si l'autre porte est fermée.

Par le terme « lié en rotation », on entend qu'il y a interaction en rotation entre les crochets. Ainsi, le pivotement à l'ouverture ou à la fermeture de l'un quelconque des crochets provoque également le pivotement de l'autre crochet respectivement à l'ouverture ou à la fermeture par l'intermédiaire du dispositif de liaison en rotation entre les crochets. Réciproquement, lorsque l'un des crochets est immobilisé en rotation, par exemple par l'olive solidaire de la porte, l'autre crochet est également immobilisé en rotation par l'intermédiaire de ce même dispositif de liaison en rotation. Ainsi, les deux crochets pivotent de façon synchronisée et l'immobilisation de l'un, par exemple par l'olive du verrou, empêche le pivotement de l'autre.

Les avantageuses dispositions suivantes sont en outre adoptées :
- chaque crochet comporte un logement d'olive délimité par un profil interne inférieur et un profil interne supérieur, lesdits profils internes étant configurés de telle manière que le profil interne inférieur se trouve en permanence dans le chemin du déplacement de l'olive correspondante et que le profil interne supérieur peut s'effacer dudit chemin et de telle manière que ladite olive exerce un couple de verrouillage lorsqu'elle appuie sur le profil interne inférieur et exerce un couple de déverrouillage lorsqu'elle appuie sur le profil interne supérieur;
- chaque crochet est sollicité vers la position de déverrouillage par des moyens élastiques ;
- la position de déverrouillage du crochet est définie par une butée ;
- l'olive est montée sur un support escamotable afin d'autoriser une fermeture non simultanée des deux portes, ce support étant sollicité vers la position active de l'olive par des moyens élastiques.

Selon un premier mode de réalisation de l'invention, les crochets sont montés pivotants autour d'axes de pivotement sensiblement parallèles à l'axe de rotation du turboréacteur.

L'organe de liaison mécanique peut être constitué par deux secteurs dentés, s'engrenant l'un dans l'autre, formés respectivement dans des parois périphériques desdits crochets et centrés sur les axes de pivotement.

L'organe de liaison mécanique peut comporter une bielle de liaison articulée à chaque extrémité sur l'un des crochets au moyen d'une articulation rotulante.

De préférence, l'organe de liaison mécanique comporte au moins deux bielles, chaque bielle étant liée de manière rotulante à un crochet respectif par l'une de ses extrémités et étant liée de manière glissante à l'autre crochet par l'autre extrémité, afin que lesdites bielles travaillent principalement en traction.

Selon un deuxième mode de réalisation de l'invention, chaque crochet est monté pivotant autour de l'axe d'un arbre de transmission sensiblement parallèle à l'axe de pivotement de la porte correspondante. L'organe de liaison mécanique assure la transmission du couple entre les deux arbres de pivotement, et est par exemple du type cardan.

Selon une variante de ce deuxième mode de réalisation, chaque crochet est monté pivotant autour d'un arbre de transmission parallèle à l'axe de pivotement de la porte correspondante et est lié en rotation à l'arbre de transmission d'un loquet de commande associé à l'autre porte et susceptible d'être entraîné en rotation entre une position de verrouillage et une position de déverrouillage par une deuxième olive équipant l'autre porte. Chaque crochet comporte un profil interne supérieur interdisant la rotation dudit crochet lorsque l'olive appuie sur ledit profil par suite d'une ouverture prématurée de ladite porte.

D'autres avantages et caractéristiques de l'invention ressortiront à la lecture de la description suivante faite à titre d'exemple et en référence aux dessins annexés dans lesquels :

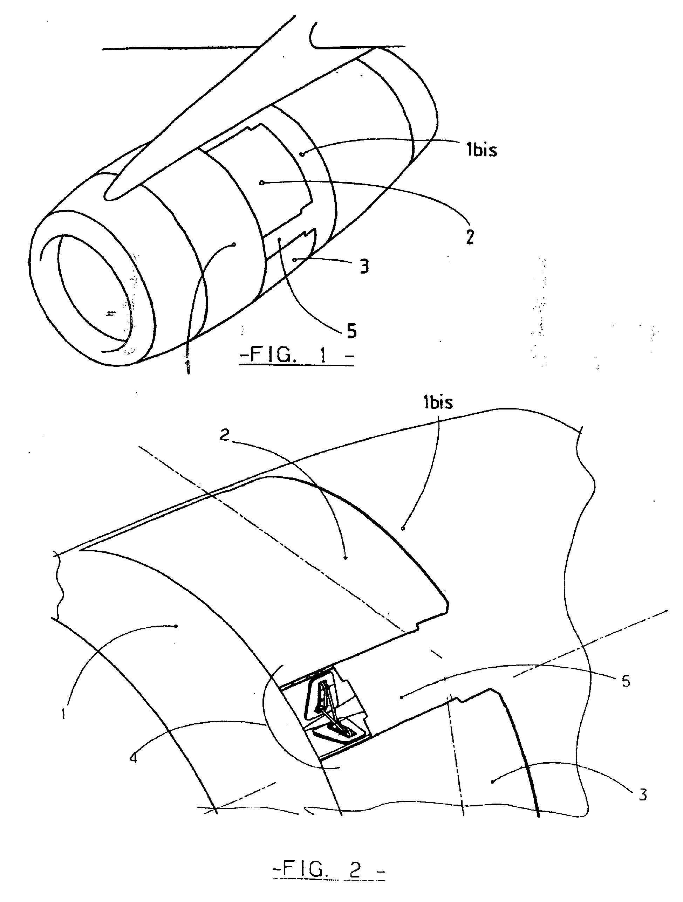

- la figure 1 représente une vue schématique en perspective d'un inverseur de poussée du type précité montré en position montée et avec les portes fermées ;
- la figure 2 représente une vue partielle en perspective d'un mode de réalisation du système de verrouillage en position verrouillée au repos, dans lequel la synchronisation de verrouillage s'effectue par bielles ;
- la figure 3 représente, à plus grande échelle, une vue de détail du système de verrouillage représenté sur la figure 2 ;
- la figure 4 représente une vue en coupe par un plan perpendiculaire à l'axe moteur, du système de verrouillage représenté sur les figures 2 et 3, en position de verrouillage actif, suite à une ouverture non simultanée ou à la tentative de déploiement d'une seule porte ;
- la figure 5 représente partiellement une section définie sur la figure 4 par un plan passant par l'axe de la bielle ;
- la figure 6 représente une vue de détail partielle en perspective, montrant l'implantation dans la poutre, d'une platine avec son crochet de verrouillage équipé de son système de rappel ;
- la figure 7 représente, dans une vue analogue à la figure 2, le mode de réalisation de l'invention défini sur la figure 2 en position déverrouillée, les deux portes s'ouvrant de manière sensiblement simultanée ;
- la figure 8 représente, à plus grande échelle, une vue de détail du système de verrouillage représenté sur la figure 7 ;
- la figure 9 représente une vue en coupe par un plan perpendiculaire à l'axe moteur, du système de verrouillage représenté sur les figures 7 et 8 ;
- les figures 10a, 10b et 10c représentent, dans une vue identique à la figure 4, en trois positions, un support d'olive escamotable qui autorise la fermeture non simultanée des deux portes ;
- la figure 11 représente, dans une vue analogue à celle de la figure 3, un système de verrouillage selon un mode de réalisation de l'invention, en position verrouillée où la synchronisation de verrouillage s'effectue par transmission de couple et où le crochet de verrouillage est naturellement auto-ouvrant ;
- la figure 12 représente, suivant une direction parallèle à l'axe de rotation d'un crochet, une vue partielle du deuxième mode de réalisation décrit sur la figure 11 ;
- la figure 13 représente, dans une vue analogue à celle de la figure 11, le deuxième mode de réalisation de l'invention décrit sur la figure 11 en position déverrouillée ;
- la figure 14 représente, dans une vue analogue à celle de la figure 12, le deuxième mode de réalisation de l'invention décrit sur la figure 13 en position déverrouillée ;
- les figures 15a, 15b et 15c représentent, dans une vue normale à la paroi latérale de porte, en trois positions, un support d'olive escamotable qui autorise la fermeture non simultanée des deux portes ;
- la figure 16 représente, dans une vue analogue à celle de la figure 3, une variante du deuxième mode de réalisation de l'invention, en position verrouillée, où la synchronisation de verrouillage s'effectue par transmission de couple et où le crochet de verrouillage est naturellement auto-fermant ;
- la figure 17 représente, dans une vue analogue à celle de la figure 3, la variante du deuxième mode de réalisation de l'invention décrit sur la figure 16 en position déverrouillée ;
- les figures 18a et 18b représentent simultanément, de façon schématique, suivant une direction parallèle aux axes de rotation des crochets de verrouillage, les systèmes de verrouillage des deux portes contiguës, en position de verrouillage passif (figure 18a) et en position de verrouillage actif (figure 18b) suite à une ouverture non simultanée ou à la tentative de déploiement d'une seule porte ; et
- la figure 19 représente, suivant une direction parallèle à l'axe de rotation d'un crochet, les trois étapes de la mise en position verrouillée des organes de verrouillage lors de la fermeture simultanée des portes.

Le système de verrouillage des portes selon la présente invention est installé sur la structure fixe 1 et 1bis de l'inverseur, dans une zone d'intégration 5 communément appelée poutre, située entre deux portes identifiées différemment par soucis de clarté, porte 2 et porte 3. Dans un même souci de clarté, la partie supérieure de la poudre 5 située au-dessus des systèmes de verrouillage 4 a été occultée dans les vues en perspective. Le système de synchronisation de verrouillage se compose d'au moins deux crochets reliés entre eux par un organe de liaison mécanique, qui assujettit l'ouverture d'un des crochets à l'ouverture de la porte de l'autre crochet.

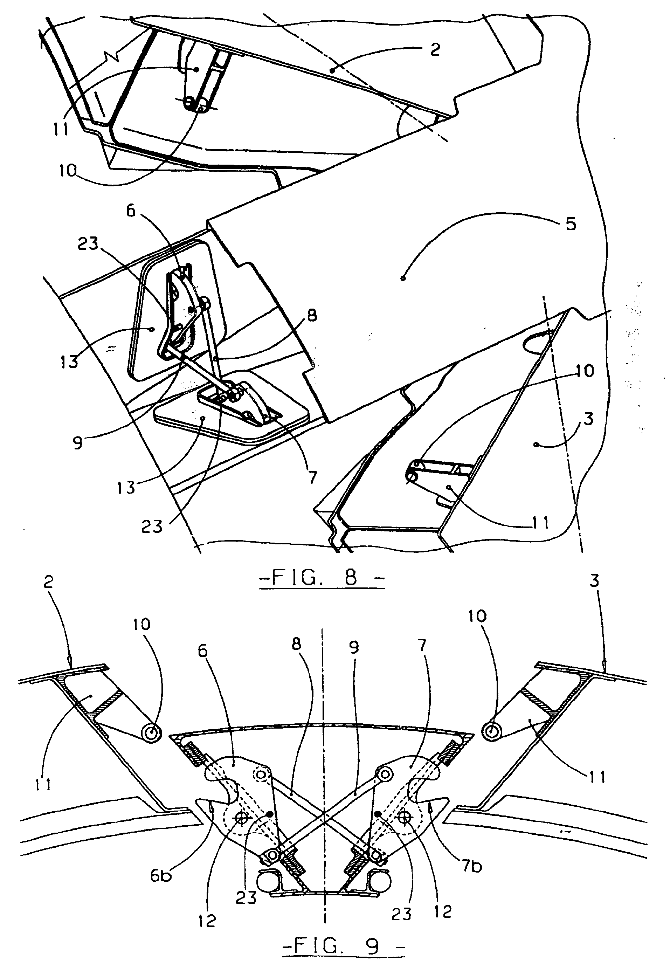

Selon un premier mode de réalisation représenté sur les figures 2 à 10, le système de synchronisation de verrouillage 4 se compose d'au moins deux crochets 6 et 7 pouvant se déplacer en rotation autour de leurs axes respectifs 12 solidaires des platines 13 fixées sur les parois latérales de la poutre 5, leur rotation s'effectuant dans un plan identique ou voisin d'un plan perpendiculaire à l'axe longitudinal moteur.

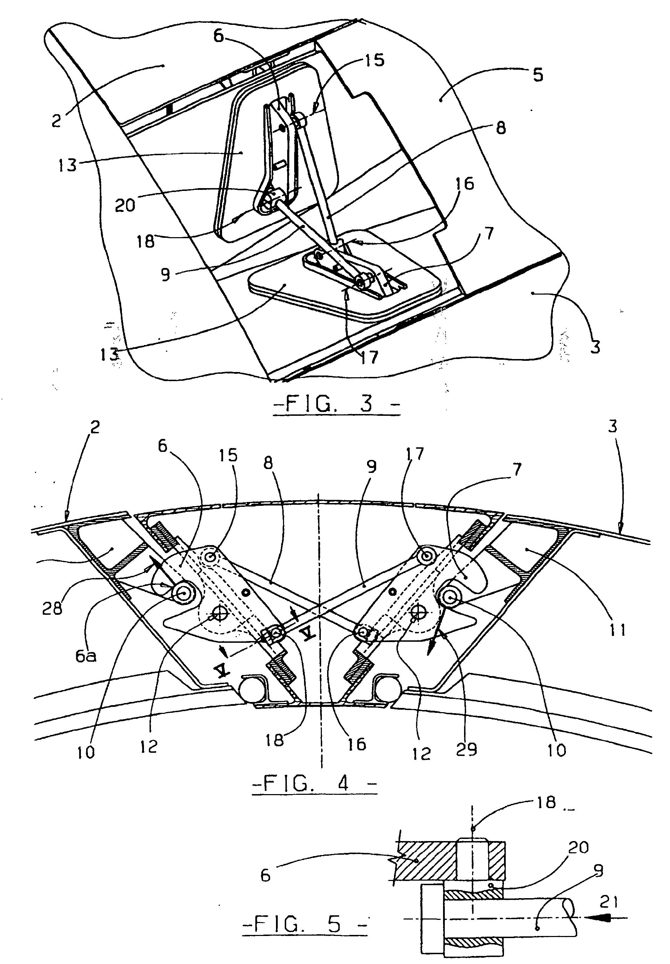

Les crochets 6 et 7 sont reliés entre eux par au moins deux bielles 8 et 9 qui assujettissent l'ouverture d'un des crochets à l'ouverture de la porte de l'autre crochet, ces bielles étant situées dans deux plans différents parallèles ou non entre eux. La bielle 8 est reliée au crochet 6 au niveau de l'axe 15 et au crochet 7 au niveau de l'axe 16, la bielle 9 étant reliée au crochet 7 au niveau de l'axe 17 et au crochet 6 au niveau de l'axe 18. On notera que la position de la bielle 9 avec le crochet 7 s'effectue au niveau de l'axe 17 par une liaison de type pivot ou rotule, et que sa liaison avec le crochet opposé 6, comme le montre en détail la figure 5, s'effectue au moyen d'un axe intermédiaire 20, monté pivotant autour de l'axe 18 solidaire du crochet 6, la liaison entre l'axe 20 et la bielle 9 étant de type pivot glissant ou glissière, autorisant un déplacement relatif entre ces deux éléments suivant la direction 21 pouvant intervenir lors de la cinématique d'ouverture ou de fermeture des crochets. Ce dispositif particulier permet également de faire travailler les bielles principalement en traction et d'éviter tout risque de flambement. Les liaisons décrites pour la bielle 9 sont identiques sur la bielle 8. Par ailleurs, il est possible de concevoir un système muni d'une seule bielle de liaison, rotulée aux deux bouts, pouvant travailler à la fois en compression et en traction.

Il est également possible de concevoir un système dépourvu de bielles, système dans lequel chaque crochet 6 et 7 possède au niveau de son profil opposé au profil assurant le verrouillage un secteur denté. Ces deux secteurs dentés s'engrenant l'un avec l'autre, assurent ainsi l'entraînement et la synchronisation desdits crochets.

Comme le montre la figure 4, les portes 2 et 3 possèdent chacune, sur leurs parois latérales contiguës à la poutre 5, une ferrure 11 munie d'une olive 10. En cas de tentative de déploiement intempestif d'une seule porte, en l'occurrence la porte 2, son olive 10 vient en contact avec le profil interne supérieur 6a du crochet 6, l'action 28 créant un moment tendant à faire pivoter autour de l'axe 12 vers l'intérieur de la poutre 5 ledit crochet 6, mettant ainsi la bielle 9 sous tension entre ses points d'accrochage 17 et 18. La porte 3 étant verrouillée, l'action 29 de l'olive 10 qui lui est associée sur le profil interne 7b inférieur du crochet 7 maintient ce dernier en position fermée. Il en résulte que le crochet 6 se trouve également immobilisé en rotation autour de son axe 12, maintenant de ce fait la porte 2 dans une position proche de sa position fermée, satisfaisante d'un point de vue sécurité.

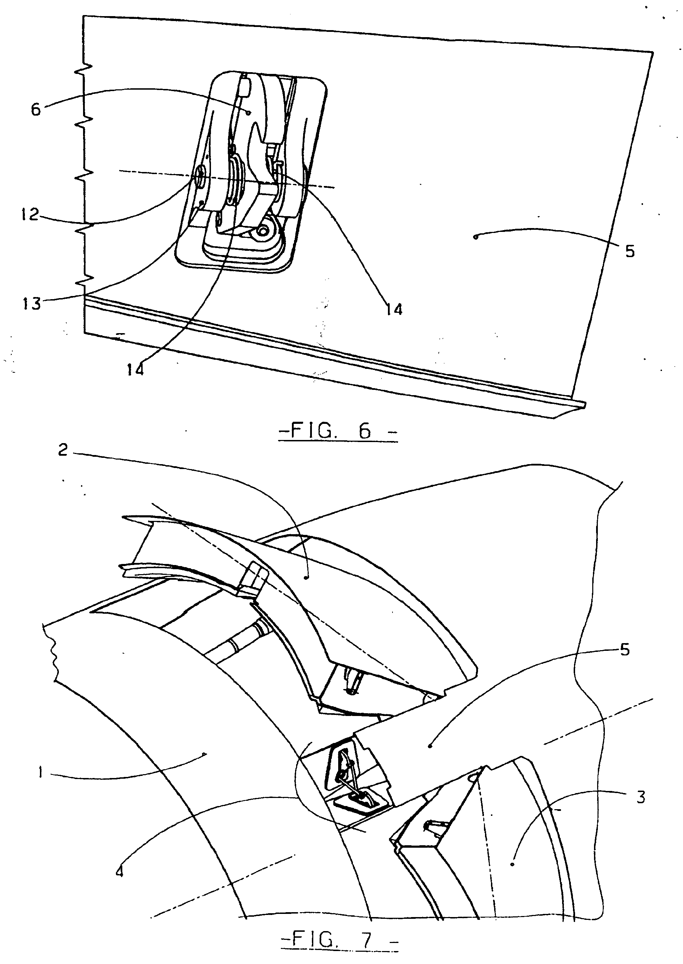

Les figures 7, 8 et 9 montrent qu'en cas d'ouverture sensiblement simultanée des deux portes 2, 3 durant la phase d'inversion de jet, les deux crochets 6 et 7 pivotent chacun autour de leur axe 12 et se mettent dans une position autorisant l'ouverture complète des deux portes 2, 3. Cette mise en position peut être initiée par l'une ou l'autre des deux olives 10 ou simultanément par les deux. Un ou plusieurs systèmes de rappel, comme par exemple un ressort de torsion 14 coaxial à l'axe 12 représenté sur la figure 6 facilite l'ouverture des crochets 6 et 7, et maintient ces derniers dans une position d'attente telle que leur profil interne inférieur respectif 6b et 7b garantisse sous l'action des olives 10 lors de la refermeture des portes, la mise automatique du système de verrouillage 4 en position de verrouillage passif. Chaque crochet 6, 7 est équipé d'une butée fixe ou réglable 23 limitant sa rotation vers l'intérieur de la poutre 5 à la position d'attente. Une désynchronisation importante de la refermeture des portes 2, 3 peut entraîner l'impossibilité pour la porte la plus en retard de se verrouiller, son olive 10 venant en butée sur le profil externe 6c du crochet qui lui est associé.

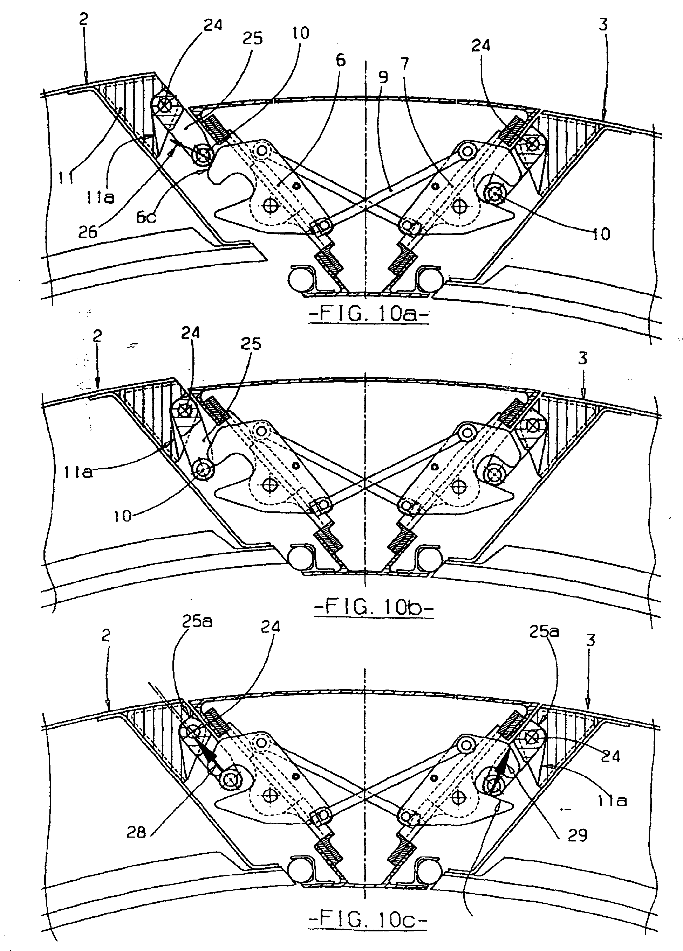

Les figures 10a, 10b et 10c représentent un support d'olive escamotable 25 autorisant la fermeture non simultanée des deux portes. Sur la figure 10a, la porte 3 étant en position fermée, l'olive 10 de la porte 2 vient en contact sur le profil externe 6c du crochet 6, ce dernier étant déjà en position de verrouillage passif, et maintenu dans cette position par l'intermédiaire de la bielle 9. Le support 25 articulé autour d'un axe longitudinal 24 solidaire de la ferrure 11 et support de l'olive 10, pivote vers l'intérieur de la porte 2 sous l'effort 26, résultant du contact entre l'olive 10 et le profil externe 6c, jusqu'à permettre la fermeture de la porte 2 comme le montre la figure 10b. Il peut être judicieux d'associer la rotation de la butée 25a à un capteur de position qui permettra de détecter une trop grande désynchronisation de fermeture et repérera ainsi certaines pannes du système d'activation des portes (fuite vérin par exemple).

En cas de tentative de déploiement d'une seule porte (figure 10c), la position de la résultante de l'effort de retenue 28 par rapport à l'axe 24 est telle que le support 25 tend à pivoter vers l'extérieur de la porte, rendant ainsi le verrouillage auto-fermant. II en est de même pour la résultante de contact 29 de l'olive 10 avec le profil interne inférieur 7b, mais comme une rotation trop importante du support 25 pourrait être préjudiciable à l'ensemble du système de verrouillage, l'association de son profil externe avec un profil interne approprié 11a de la ferrure 11 limite cette rotation. Il est à noter qu'un système de rappel non représenté, comme par exemple un ressort de torsion coaxial à l'axe 24, maintient le support 25 dans une position permettant à la fois d'éviter tout risque d'interférence avec la poutre 5, mais également assurant la retenue de l'olive 10 avec les profils internes des crochets 6, 7. La butée 25a peut également être remplacée par un ressort à double effet qui place l'olive 10 dans une position adaptée à son enclenchement lors de son verrouillage normal par contact avec le profil 6b, tout en lui permettant de s'engager correctement dans le crochet 6, lors d'un verrouillage desynchronisé des portes par contact avec le profil 6c, pour faire transiter l'effort 29 correctement de l'olive 18 au verrou lors du blocage de la porte correspondante.

On notera également que d'autres principes d'escamotage connus de l'homme de métier peuvent être envisagés, comme par exemple un support 25 d'olive 10 s'escamotant par rotation autour d'un axe vertical parallèle aux parois latérales de porte, ou bien en remplaçant le support 25 et l'olive 10 par un crochet pivotant autour d'un axe normal aux parois latérales de portes.

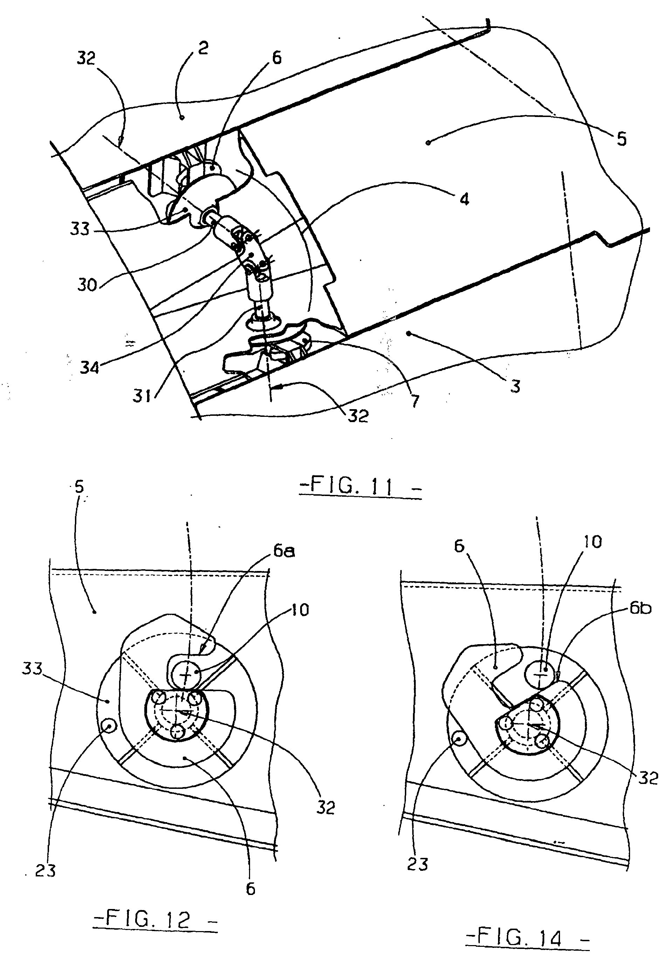

Selon un second mode de réalisation représenté sur les figures 11 à 15, le système de synchronisation de verrouillage 4 se compose d'au moins deux crochets 6 et 7 équipés de leur arbre de transmission respectif 30 et 31. Chaque ensemble 6, 30 et 7, 31 est monté libre en rotation autour de leur axe respectif 32, matérialisant le palier des platines 33 servant à l'intégration de l'ensemble du système de verrouillage 4 sur les parois latérales de la poutre 5, la rotation desdits ensembles s'effectuant dans un plan sensiblement parallèle au flanc de puits de leur porte respective. II est à noter que chaque ensemble crochet 6, 7 plus axe 30, 31 peut être envisagé monobloc.

Un organe de liaison mécanique 34 généralement situé à l'intérieur de la poutre 5, assure la transmission du couple entre les arbres 30 et 31. La liaison 34 peut être de type cardan comme représentée sur les figures 11 et 13, mais il est possible d'envisager une transmission de type renvoi conique, ou tout autre transmission mécanique satisfaisante en termes de synchronisation et de transmission de couple, connue de l'homme de métier.

La figure 12 représente le crochet 6 et l'olive 10 associés à la porte 2 en position de verrouillage passif, le crochet 7 et l'olive 10 associés à la porte 3 (non représentés) occupant une position identique. Lors d'une tentative de déploiement d'une seule porte, par exemple la porte 2, son olive 10 vient en contact sur le profil interne supérieur 6a dudit crochet 6, créant un couple tendant à ouvrir le verrou par rotation autour de l'axe 32 de l'ensemble crochet 6 et arbre 30. Ce couple est intégralement transmis par l'intermédiaire de la liaison 34 à l'arbre 31 et au crochet 7. La porte 3 étant maintenue fermée et verrouillée par ses organes de verrouillage primaire et/ou secondaire, empêche en créant par le contact de son olive 10 sur le profil interne inférieur 7b du crochet 7 qui lui est associé, un couple opposé au précédent, empêchant ainsi la rotation du crochet 6 et par voie de conséquence le déploiement de la porte 2.

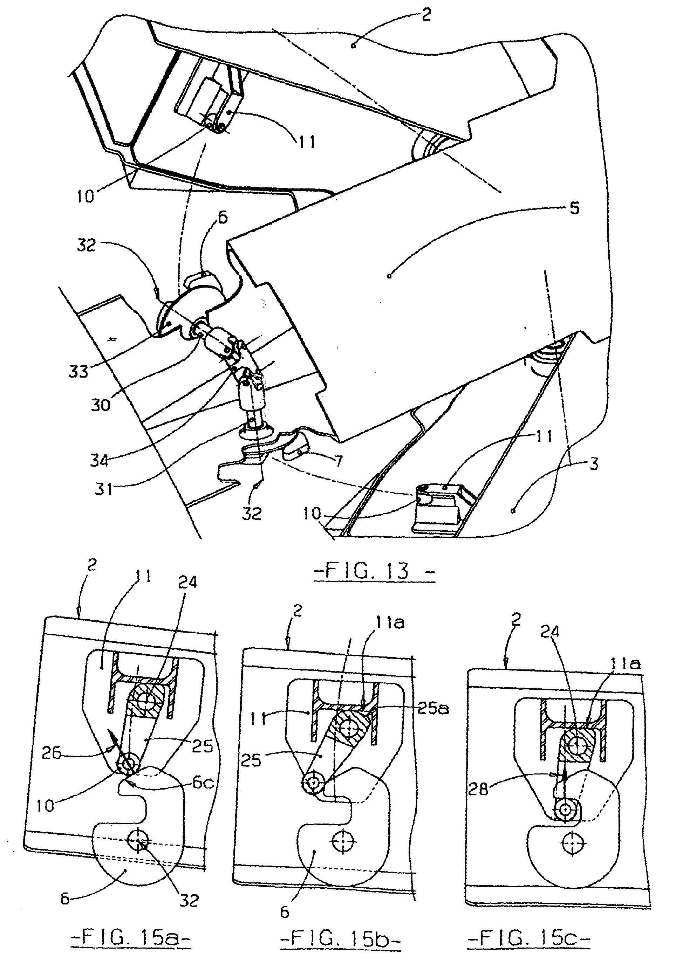

Lors de l'ouverture sensiblement simultanée des deux portes 2, 3 durant la phase d'inversion de jet, les deux crochets 6 et 7 pivotent chacun autour de leurs axes 32 et se mettent dans une position autorisant l'ouverture complète des deux portes 2, 3 comme montrée sur la figure 14. Cette mise en position peut être initiée par l'une ou l'autre des deux olives 10 ou simultanément par les deux. Un ou plusieurs systèmes de rappel, non représentés, facilitent l'ouverture des crochets 6 et 7, et maintiennent ces derniers dans une position d'attente telle que leur profil interne inférieur respectif 6b et 7b assure sous l'action des olives 10 lors de la refermeture des portes, la mise automatique du système de verrouillage en position de verrouillage passif. Au moins une des deux platines 33 possède une butée fixe ou réglable 23 limitant l'ouverture des crochets 6, 7 jusqu'à la position d'attente (figure 14). Les figures 15(a), (b) et (c) représentent un support d'olive escamotable 25 analogue à celui décrit précédemment sur les figures 10(a), (b) et (c), l'axe 24 étant dans ce cas perpendiculaire aux parois latérales de porte, la rotation du levier 25 autour de ce dernier s'effectuant vers l'avant ou l'arrière de la porte 2,3.

Il est à noter que le sens de rotation pour l'ouverture des crochets 6 et 7 peut se faire indifféremment vers l'avant ou vers l'arrière des portes 2, 3.

On notera également qu'il est possible d'implanter l'ensemble du système de verrouillage synchronisé 4 dans la structure fixe de l'inverseur située en amont des portes 2 et 3, les ferrures 11 pouvant être dans ce cas installées indifféremment sur les parois latérales ou frontales des portes, le sens d'ouverture des crochets 6 et 7 se faisant alors de l'amont vers l'aval.

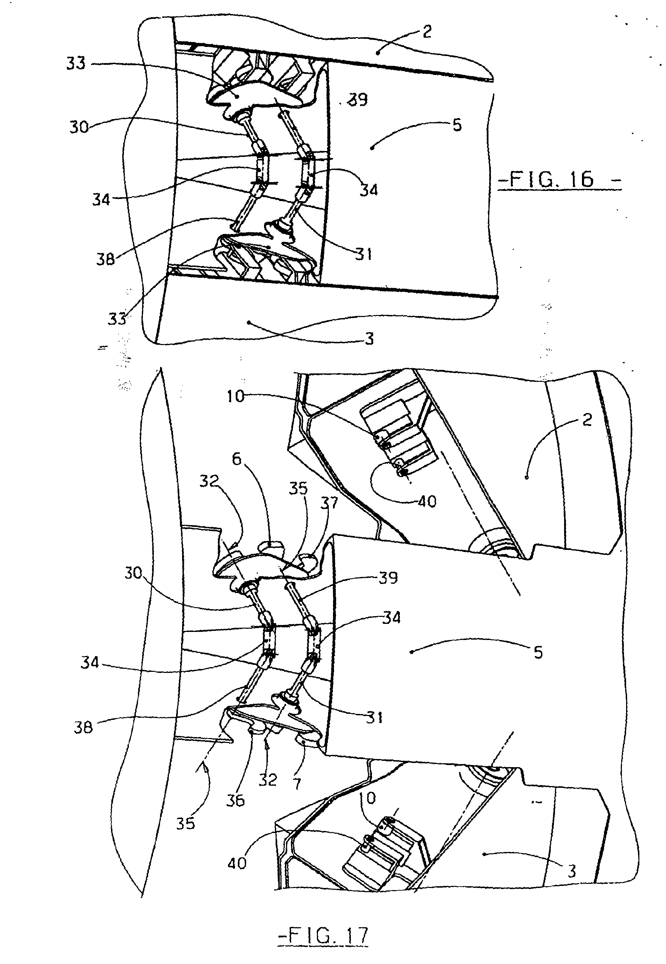

Les figures 16 à 19 représentent une variante du mode de réalisation décrit précédemment, dans laquelle les crochets de retenue 6 et 7 possèdent un profil interne supérieur 6a et 7a interdisant la rotation de ces crochets en cas de contact 28 avec l'olive 10 et rendant lesdits crochets 6 et 7 auto-fermants.

Afin d'autoriser l'ouverture des portes 2 et 3 en fonctionnement normal d'inversion de jet, il est impératif que les crochets 6 et 7 puissent être mis dans une position autorisant le passage de l'olive 10 située en vis-à-vis d'eux. Cette mise en position ne pouvant être effectuée par contact avec les olives 10 sur les profils internes supérieurs 6a et 7a, chacun des deux crochets 6 et 7 équipé de son arbre de transmission respectif 30 et 31, se trouve associé par l'intermédiaire d'une liaison mécanique 34 à un loquet de commande 36, 37 également pourvu d'un arbre de transmission 38, 39.

Comme le montre les figures 16 et 17, le crochet 6 muni de son arbre 30 est relié au loquet 36 équipé de son arbre 38, tandis que le crochet 7 muni de son arbre 31 est relié au loquet 37 équipé de son arbre 39, l'ouverture des loquets 36 et 37 étant commandée par leur olive respective 40 localisée sur les portes 2, 3, près des olives de verrouillage 10.

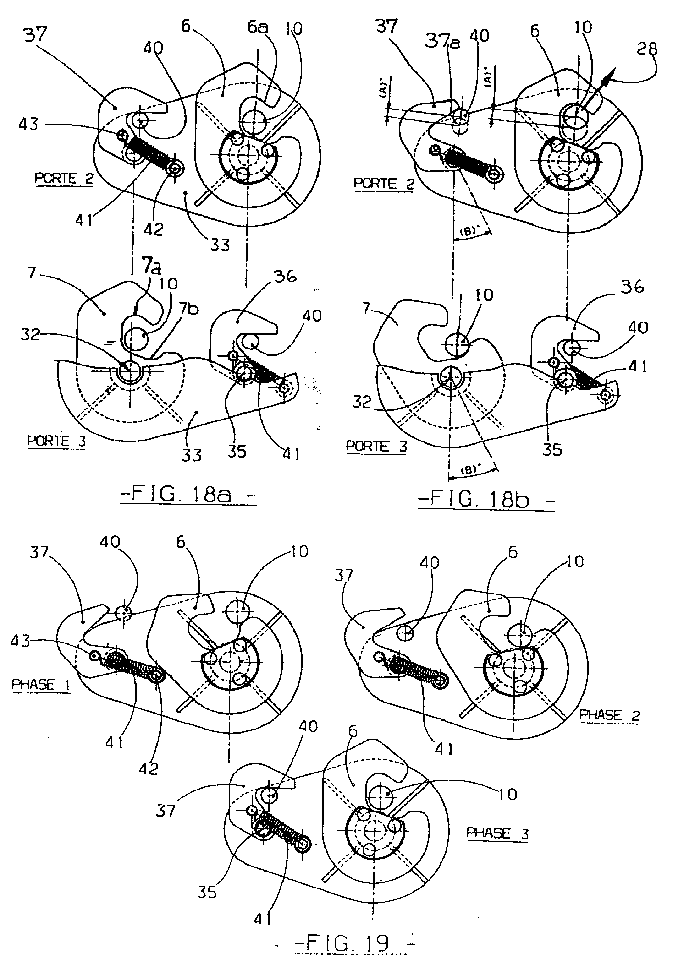

Les figures 18a et 18b représentent d'une façon schématique l'assujettissement de l'ouverture d'un crochet 7 à l'ouverture de la porte 2 associée à l'autre crochet 6. La figure 18a représente les portes 2 et 3 en position fermée, chaque olive 40 étant en contact avec le profil interne 36a ou 37a qui lui est associé. Comme le montre la figure 18b, en cas de tentative de déploiement intempestif d'une seule porte, en l'occurrence la porte 2, les olives 40 et 10 associées à cette porte 2 se déplacent d'une même valeur angulaire A jusqu'à ce que l'olive 10 vienne en contact 28 avec le profil interne supérieur 6a du crochet 6, avortant ainsi la tentative de déploiement.

Alors que le débattement angulaire A de l'olive 10 n'entraîne aucun déplacement significatif du crochet 6, ce même débattement angulaire de l'olive 40 entraîne en rotation le loquet 36 d'une valeur angulaire B, valeur intégralement transmise par la liaison 34 au crochet 7 monté en vis-à-vis de la porte 3, cette dernière étant dans la même position fermée sur la figure 18(a). Une définition appropriée du profil interne inférieur 7b et 6b des crochets 6 et 7 autorisent ce débattement angulaire B, de façon à garantir la reprise des efforts de retenue de la porte 2 uniquement par le crochet 6, ou de la porte 3 uniquement par le crochet 7. De ce fait, dans ce mode de réalisation, les efforts induits dans les crochets 6, 7 étant directement transmis à la structure fixe de l'inverseur, les couples transmis par les liaisons 34 sont peu élevés d'où la possibilité d'utiliser des composants de faible section, ce qui est toujours intéressant du point de vue de la masse.

Chaque loquet 36 et 37 est relié à au moins un système de rappel pouvant être comme représenté sur les figures 18 et 19, constitué par un ressort de traction 41 dont l'une des extrémités est solidaire de la platine 33 au point 42, son extrémité opposée étant solidaire d'un loquet au point 43. L'implantation des points 42 et 43 par rapport à l'axe de rotation 35 des loquets 36, 37 est telle que, durant la cinématique d'ouverture ou de fermeture desdits loquets 36 et 37, il se produise une inversion du moment de rappel généré par chaque ressort 41. Des systèmes de rappel procurant un fonctionnement identique peuvent également être installés sur les crochets 6 et 7.

La figure 19 décompose en trois phases la cinématique de refermeture du verrou 6 et du loquet 37, correspondant à une refermeture quasi-simultanée des portes 2 et 3. La phase 1 correspondant à la position de prise de contact des deux olives 10 avec les crochets 6 et 7, ces derniers ainsi que les loquets 36 et 37 étant maintenus ouverts sous l'action des ressorts 41. La phase 2 correspond à la position de rupture de contact entre l'olive 10 et les profils internes inférieurs 6b et 7b des crochets 6 et 7. La rotation des crochets 6 et 7, entre la phase 1 et la phase 2, est telle qu'elle positionne les ressorts 41 dans une position assurant un couplé de refermeture desdits crochets 6, 7 et loquets 36, 37, jusqu'à les amener et les maintenir dans la position de verrouillage passif représentée sur la phase 3. Il est à noter, qu'en cas de désynchronisation importante des portes 2 et 3, les olives 10 et 40 peuvent être installées sur des supports escamotables, de conception identique ou proche de ceux décrits sur la figure 15.

Ces systèmes de verrouillage 4 peuvent être appliqués à un inverseur à grilles muni de capots coulissants. Le verrou synchronise alors la translation simultanée des deux capots en utilisant exactement le même principe que celui présenté ici pour des portes 2, 3.

## Revendications

1. Inverseur de poussée de turboréacteur comportant, dans une section annulaire d'un capotage extérieur entourant un canal d'éjection de gaz, une structure fixe (1) comportant des poutres longitudinales (5) délimitant entre elles des passages, et une pluralité de portes (2, 3) mobiles qui, en position inactive lors d'un fonctionnement en jet direct, obturent lesdits passages et constituent une partie du capotage extérieur et qui, en position d'inversion de poussée obturent au moins partiellement le canal d'éjection et dévient le jet gazeux vers les passages, un système de verrouillage autorisant une ouverture quasi-simultanée desdites portes (2, 3) étant prévu entre deux portes (2, 3) adjacentes, ce système comportant pour chacune desdites portes (2, 3) au moins un crochet (6, 7) monté pivotant sur la structure fixe (1) entre une position de verrouillage de ladite porte (2, 3) et une position de déverrouillage, ce crochet (6. 7) étant susceptible d'être entraîné en rotation par une olive (10) solidaire de ladite porte (2, 3) lors du mouvement d'ouverture ou de fermeture de cette dernière, **caractérisé en ce que** chaque crochet (6) de l'une des deux portes (2) est lié en rotation à un crochet (7) de l'autre porte (3) par un organe de liaison mécanique (8, 9, 34) de manière à empêcher le déverrouillage d'une porte (6) si l'autre porte (7) est fermée:

2. Inverseur de poussée selon la revendication 1, **caractérisé par le fait que** chaque crochet (6; 7) comporte un logement d'olive (10) délimité par un profil interne inférieur (6b, 7b) et un profil interne supérieur (6a, 7a), lesdits profils internes étant configurés de telle manière que le profil interne inférieur (6b, 7b) se trouve en permanence dans le chemin du déplacement de l'olive (10) correspondante et que le profil interne supérieur (6a, 7a) peut s'effacer dudit chemin et de telle manière que ladite olive (10) exerce un couple de verrouillage lorsqu'elle appuie sur le profil interne inférieur (6b, 7b) et exerce un couple de déverrouillage lorsqu'elle appuie sur le profil interne supérieur (6a, 7a).

3. Inverseur de poussée selon l'une quelconque des revendications 1 ou 2, **caractérisé par le fait que** chaque crochet (6, 7) est sollicité vers la position de déverrouillage par des moyens élastiques (14).

4. Inverseur de poussée selon la revendication 3, **caractérisé par le fait que** la position de déverrouillage du crochet (6, 7) est définie par une butée (23).

5. Inverseur de poussée selon l'une quelconque des revendications 1 à 4, **caractérisé par le fait que** l'olive (10) est montée sur un support escamotable (25) afin d'autoriser une fermeture non simultanée des deux portes, ce support (25) étant sollicité vers la position active de l'olive (10) par des moyens élastiques.

6. Inverseur de poussée selon l'une des revendications 1 à 5, **caractérisé par le fait que** les crochets (6, 7) sont montés pivotants autour d'axes de pivotement (12) sensiblement parallèles à l'axe de rotation du turboréacteur.

7. Inverseur de poussée selon la revendication 6, **caractérisé par le fait que** l'organe de liaison mécanique est constitué par deux secteurs dentés, s'engrenant fun dans l'autre, formés respectivement dans des parois périphériques desdits crochets (6, 7) et centrés sur les axes de pivotement (12).

8. Inverseur de poussée selon la revendication 6, **caractérisé par le fait que** l'organe de liaison mécanique comporte une bielle de liaison articulée à chaque extrémité sur l'un des crochets (6, 7) au moyen d'une articulation rotulante (15).

9. Inverseur de poussée selon la revendication 6, **caractérisé par le fait que** l'organe de liaison mécanique comporte au moins deux bielles (8, 9), chaque bielle (8, 9) étant liée de manière rotulante à un crochet respectif (6, 7) par l'une de ses extrémités (15, 17) et étant liée de manière glissante à l'autre crochet (7, 6) par l'autre extrémité (16, 18), afin que lesdites bielles (8, 9) travaillent principalement en traction.

10. Inverseur de poussée selon l'une des revendications 1 à 5, **caractérisé par le fait que** chaque crochet (6, 7) est monté pivotant autour de l'axe d'un arbre de transmission (30, 31) sensiblement parallèle à l'axe de pivotement de la porte (2, 3) correspondante.

11. Inverseur de poussée selon la revendication 10, **caractérisé par le fait que** l'organe de liaison mécanique (34) assure la transmission du couple entre les deux arbres de pivotement (30, 31).

12. Inverseur de poussée selon la revendication 11, **caractérisé par le fait que** la liaison entre les deux arbres est de type cardan.

13. inverseur de poussée selon l'une quelconque des revendications 1 à 5. **caractérisé par le fait que** chaque crochet (6, 7) est monté pivotant autour de l'axe d'un arbre de transmission (30, 31) parallèle à l'axe de pivotement de la porte correspondante (2, 3) et est lié en rotation à l'arbre de transmission (38, 39) d'un loquet de commande (36, 37) associé à l'autre porte (2, 3) et ledit loquet de commande (36, 37) étant susceptible d'être entraîné en rotation entre une position de verrouillage et une position de déverrouillage par une deuxième olive (40) équipant l'autre porte (6, 7).

14. Inverseur de poussée selon la revendication 13, **caractérisé par le fait que** chaque crochet (6, 7) comporte un profil interne supérieur (6a) interdisant la rotation dudit crochet (6, 7) lorsque l'olive (10) appuie sur ledit profil (6a) par suite d'une ouverture prématurée de ladite porte (6, 7).

## Patentansprüche

1. Schubumlenker für Turbinen-Triebwerk, der in einem ringförmigen Querschnitt einer einen Gasausstoßkanal umgebenden Außenverkleidung eine feste Struktur (1) umfasst, die Längsträger (5) mit dazwischenliegenden Durchtrittsöffnungen aufweist, und eine Mehrzahl von beweglichen Klappen (2, 3), die in inaktiver Position bei Direktstrahibetrieb die genannten Durchtrittsöffnungen verschließen und einen Teil der Außenverkleidung bilden und die in Schubumkehrposition den Ausstoßkanal wenigstens teilweise verschließen und den Gasstrahl zu den Durchtrittsöffnungen umleiten, ein Verriegelungssystem, das ein quasisimultanes Öffnen der genannten Klappen (2, 3) erlaubt und zwischen zwei benachbarten Klappen (2, 3) vorgesehen ist, wobei dieses System für jede der genannten Klappen (2, 3) wenigstens einen Haken (6, 7) aufweist, der an der festen Struktur (1) zwischen einer Verriegelungsposition der genannten Klappe (2, 3) und einer Entriegelungsposition drehbeweglich angebracht ist, wobei dieser Haken (6, 7) durch einen fest mit der genannten Klappe (2, 3) verbundenen Drehknopf (10) bei der Öffnungs- und Schließbewegung der letztgenannten Klappe gedreht werden kann, **dadurch gekennzeichnet, dass** jeder Haken (6) einer der beiden Klappen (2) mit einem Haken (7) der anderen Klappe (3) durch ein mechanisches Verbindungsorgan (8, 9, 34) drehbeweglich so verbunden ist, dass das Entriegein einer Klappe (2) unmöglich wird, wenn die andere Klappe (3) geschlossen ist.

2. Schubumlenker nach Anspruch 1, **dadurch gekennzeichnet, dass** jeder Haken (6, 7) ein durch ein unteres Innenprofil (6b, 7b) und ein oberes Innenprofil (6a, 7a) begrenztes Drehknopflager (10) aufweist, wobei die genannten Innenprofile so ausgebildet sind, dass sich das untere Innenprofil (6b, 7b) ständig in der Bewegungsbahn des entsprechenden Drehknopfs (10) befindet und dass sich das obere Innenprofil (6a, 7a) aus der genannten Bahn so zurückziehen kann, dass der genannte Drehknopf (10) ein Verriegelungsmoment ausübt, wenn er auf dem unteren Innenprofil (6b, 7b) aufliegt, und ein Entriegelungsmoment ausübt, wenn er auf dem oberen Innenprofil (6a, 7a) aufliegt.

3. Schubumlenker nach einem der Ansprüche 1 oder 2, **dadurch gekennzeichnet, dass** jeder Haken (6, 7) durch elastische Mittel (14) in Richtung der Entriegelungsposition beansprucht ist.

4. Schubumlenker nach Anspruch 3, **dadurch gekennzeichnet, dass** die Entriegelungsposition des Hakens (6, 7) durch einen Anschlag (23) begrenzt ist.

5. Schubumlenker nach einem der Ansprüche 1 bis 4, **dadurch gekennzeichnet, dass** der Drehknopf (10) an einer einziehbaren Stütze (25) befestigt ist, um so ein nichtslmultanes Schlleßen der beiden Klappen zu ermöglichen, wobei diese Stütze (25) durch elastische Mittel in Richtung der aktiven Position des Drehknopfs (10) beansprucht ist.

6. Schubumlenker nach einem der Ansprüche 1 bis 5, **dadurch gekennzeichnet, dass** die Haken (6, 7) drehbar an Schwenkachsen (12) angebracht sind, die im Wesentlichen parallel zur Drehachse des Turbinen-Triebwerks verlaufen.

7. Schubumlenker nach Anspruch 6, **dadurch gekennzeichnet, dass** das mechanische Verbindungsorgan aus zwei Zahnsegmenten besteht, die inelnandergreifen und jeweils in den Umfangswänden der genannten Haken (6, 7) ausgebildet und an den Schwenkachsen (12) zentriert sind.

8. Schubumlanker nach Anspruch 6, **dadurch gekennzeichnet, dass** das mechanische Verbindungsorgan eine Verbindungsstange aufweist, die an jedem Ende mittels eines Kugelgelenks (15) mit einem der Haken (6, 7) verbunden ist.

9. Schubumlenker nach Anspruch 6, **dadurch gekennzeichnet, dass** das mechanische Verbindungsorgan wenigstens zwei Stangen (8, 9) aufweist, wobei jede Stange (8, 9) an einem der Enden (15, 17) drehbeweglich mit einem entsprechenden Haken (6, 7) verbunden und an dem anderen Ende (16, 18) gleitbeweglich mit dem anderen Haken (7, 6) verbunden ist, sodass die genannten Stangen (8, 9) hauptsächlich auf Zug arbeiten.

10. Schubumlenker nach einem der Ansprüche 1 bis 5, **dadurch gekennzeichnet, dass** jeder Haken (6, 7) um die Achse einer Transmissionswelle (30, 31) drehbar angebracht ist, die im Wesentlichen parallel zu der Schwenkachse der entsprechenden Klappe (2, 3) verläuft.

11. Schubumlenker nach Anspruch 10, **dadurch gekennzeichnet, dass** das mechanische Verbindungsorgan (34) die Übertragung des Moments zwischen den beiden Schwenkachsen (30, 31) gewährleistet.

12. Schubumlenker nach Anspruch 11, **dadurch gekennzeichnet, dass** es sich bei der Verbindung zwischen den beiden Wellen um eine Kardanverbindung handelt.

13. Schubumlenker nach einem der Ansprüche 1 bis 5, **dadurch gekennzeichnet, dass** jeder Haken (6, 7) um die Achse einer Transmissionswelle (30, 31) drehbar angebracht ist, die parallel zur Schwenkachse der entsprechenden Klappe (2, 3) verläuft, und drehbeweglich mit der Transmissionswelle (38, 39) einer der anderen Klappe (2, 3) zugeordneten Steuerklinke (36, 37) verbunden ist und die genannte Steuerklinke (36, 37) durch einen zweiten, an der anderen Klappe (6, 7) vorgesehenen Drehknopf (40) zwischen einer Verriegelungs- und einer Entriegelungsposition gedreht werden kann.

14. Schubumlenker nach Anspruch 13, **dadurch gekennzeichnet, dass** jeder Haken (6, 7) ein oberes Innenprofil (6a) aufweist, das die Rotation des genannten Hakens (6, 7) unterbindet, wenn der Drehknopf (10) Infolge eines vorzeitigen Öffnungsvorgangs der genannten Klappe (6, 7) auf dem genannten Profil (6a) aufliegt.

## Claims

1. Thrust reverser for a turbojet engine comprising, in an annular section of an outer cowling surrounding a gas ejection channel, a fixed structure (1) comprising longitudinal beams (5) delimiting passages between them, and a plurality of mobile flaps (2, 3) which, in the inactive position during direct jet operation, shut the said passages and constitute a part of the outer cowling and which, in the thrust reversal position, shut the injection channel at least partially and deviate the gas jet towards the passages, a locking system which allows quasi-simultaneous opening of the said flaps (2, 3) being provided between two adjacent flaps (2, 3), the system comprising at least one hook (6, 7) for each of the said flaps (2, 3), which is mounted so as to pivot on the structure (1) between a position locking the said flap (2, 3) and an unlocking position, this hook (8, 7) being driveable in rotation by a nipple (10) secured to the said flap (2, 3) during the opening or closure movement of the latter, **characterised in that** each hook (6) of one of the two flaps (2) is linked in rotation with a hook (7) of the other flap (3) by a mechanical linking member (8, 9, 34) so as to prevent the unlocking of one flap (2) if the other flap (3) is closed.

2. Thrust reverser according to Claim 1, **characterised in that** each hook (6, 7) comprises a nipple housing (10) delimited by a lower internal profile (6b, 7b) and an upper internal profile (6a, 7a), the said internal profiles being configured so that the lower internal profile (6b, 7b) permanently lies in the path of the movement of the corresponding nipple (10) and the upper internal profile (6a, 7a) can withdraw from the said path, and so that the said nipple (10) exerts a locking torque when it bears on the lower internal profile (6b, 7b) and exerts an unlocking torque when it bears on the upper internal profile (6a, 7a).

3. Thrust reverser according to either one of Claims 1 or 2, **characterised in that** each hook (6, 7) is urged towards the unlocking position by resilient means (14).

4. Thrust reverser according to Claim 3, **characterised in that** the unlocking position of the hook (6, 7) is defined by a stop (23).

5. Thrust reverser according to any one of Claims 1 to 4, **characterised in that** the nipple (10) is mounted on a retractable support (25) in order to allow non-simultaneous closure of the two flaps, this support (25) being urged towards the active position of the nipple (10) by resilient means.

6. Thrust reverser according to one of Claims 1 to 5, **characterised in that** the hooks (6, 7) are mounted so as to pivot about pivoting axes (12) substantially parallel to the rotation axis of the turbojet engine.

7. Thrust reverser according to Claim 6, **characterised in that** the mechanical linking member consists of two toothed sectors engaging in each other, formed respectively in peripheral walls of the said hooks (6, 7) and centred on the pivoting axes (12).

8. Thrust reverser according to Claim 6, **characterised in that** the mechanical linking member comprises a link rod articulated at each end on one of the hooks (6, 7) by means of a swivelling articulation.

9. Thrust reverser according to Claim 6, **characterised in that** the mechanical linking member comprises at least two rods (8, 9), each rod (8, 9) being linked by one of its ends (15, 17) to a respective hook (6, 7) so as to swivel and being linked by the other end (16, 18) to the other hook (7, 6) so as to slide, so that the said rods (8, 9) work principally in traction.

10. Thrust reverser according to one of Claims 1 to 5, **characterised in that** each hook (6, 7) is mounted so as to pivot about the axis of a transmission shaft (30, 31) substantially parallel to the pivoting axis of the corresponding flap (2, 3).

11. Thrust reverser according to Claim 10, **characterised in that** the mechanical linking member (34) transmits the torque between the two pivoting shafts (30, 31).

12. Thrust reverser according to Claim 11, **characterised in that** the linkage between the two shafts is of the universal type.

13. Thrust reverser according to any one of Claims 1 to 5, **characterised in that** each hook (6, 7) is mounted so as to pivot about the axis of a transmission shaft (30, 31) parallel to the pivoting axis of the corresponding flap (2, 3) and is linked in rotation with the transmission shaft (38, 39) of a control latch (36, 37) associated with the other flap (2, 3), the said control latch (36, 37) being driveable in rotation between a locking position and an unlocking position by a second nipple (40) fitted to the other flap (6, 7).

14. Thrust reverser according to Claim 13, **characterised in that** each hook (6, 7) comprises an upper internal profile (6a) preventing the said hook (6, 7) from rotating when the nipple (10) bears on the said profile (6a) following premature opening of the said flap (6, 7).
